# FASCICULE DE BREVET EUROPEEN

(11) **EP 2 957 487 B1**
(45) Date de publication et mention de la délivrance du brevet: **25.09.2019**
(21) Numéro de dépôt: 15172820.1
(22) Date de dépôt: 19.06.2015
(51) Int. Cl.: B62D 55/32

(54) **DISPOSITIF DE MANUTENTION POUR UNE CHENILLE DE VÉHICULE, DISPOSITIF ET PROCÉDÉ DE CHANGEMENT DE SEMELLES DE CHENILLE METTANT EN OEUVRE UN TEL DISPOSITIF DE MANUTENTION**
INSTANDSETZUNGSVORRICHTUNG FÜR EINE FAHRZEUG-LAUFKETTE, VORRICHTUNG UND VERFAHREN ZUM WECHSELN DER KETTEN-LAUFFLÄCHEN MITHILFE DIESER INSTANDSETZUNGSVORRICHTUNG
HANDLING DEVICE FOR A VEHICLE TRACK, DEVICE AND METHOD FOR CHANGING TRACK SOLES USING SUCH A HANDLING DEVICE

(30) Priorité: 20.06.2014 FR 1401448
(43) Date de publication de la demande: 23.12.2015
(73) Titulaire: NEXTER Systems, 42328 Roanne (FR)
(72) Inventeur: Yaha, Hakim, 18023 BOURGES (FR); Guitton, David, 18023 BOURGES (FR); Ennelin, Christophe, 18023 BOURGES (FR); Charlier, Dominique, 18023 BOURGES (FR); Berruer, Nicolas, 18023 BOURGES (FR); Lantuech, Bertrand, 18023 BOURGES (FR)
(74) Mandataire: Cabinet Chaillot

(56) Documents cités:
- JP-U- S54 173 179
- RU-C1- 2 296 076
- US-A1- 2010 172 729

## Description

Le domaine technique de l'invention est celui des outillages destinés à la manutention et l'entretien des chenilles de véhicules et en particulier des chenilles de char.

Les opérations de manutention des chenilles de véhicules sont longues et pénibles en raison de la masse de ces composants.

L'opération de changement des semelles d'une chenille d'un véhicule tel qu'un char impose par ailleurs de dérouler celle-ci au sol puis de la placer sur sa tranche afin de pouvoir accéder de part et d'autre de la chenille afin de dévisser les semelles usagées et d'en remonter des nouvelles. Une telle opération est classiquement faite par une équipe de cinq à dix opérateurs répartis sur la longueur de la chenille et équipés de barres pour faire levier compte tenu de l'imposante masse des chenilles de char.

Des moyens mécanisés tels que des chariots élévateurs ou des tracteurs peuvent accompagner l'opération qui demeure très contraignante, longue, difficile et dangereuse.

On connaît par le brevet russe RU2296076 un dispositif d'enroulement d'une chenille sur elle-même ainsi que des moyens de basculement de cette chenille enroulée, d'une position verticale vers une position horizontale où elle repose sur la tranche de ses patins. Ce dispositif de manutention est monté à demeure sur un plateau fixé au sol.

L'enroulement sur ce tambour d'une chenille posée au sol va donc conduire à des efforts importants de frottement de la chenille sur le sol, ce qui impose un surdimensionnement de la motorisation et des consommations en énergie importantes.

La demande de brevet américain US2010172729 A1 divulgue un dispositif pour la manipulation d'une charge, telle qu'une bobine de tôle, comprenant un support apte à supporter la charge, le support se déplaçant en rotation sur un châssis entre au moins une première position dans laquelle l'axe de la charge est verticale, appelée la position verticale de l'axe, et une seconde position dans laquelle l'axe de la charge est à l'horizontale, dite position à axe horizontal.

L'invention se propose de résoudre les problèmes de pénibilité, dangerosité et complexité, tant des opérations de manutention d'une chenille de véhicule que des opérations de changement des semelles d'une chenille d'un véhicule. L'invention permet aussi de récupérer une chenille posée sur le sol avec une architecture simple comportant une motorisation qui n'a pas besoin d'être surdimensionnée.

L'invention se propose également de réduire le nombre d'opérateurs nécessaires pour la manutention et le changement des semelles de chenilles.

L'invention porte sur un dispositif de manutention pour une chenille de véhicule caractérisé en ce qu'il comporte un châssis portant une bobine mobile ayant un axe de révolution, et comportant un fut destiné à enrouler ou dérouler la chenille autour de l'axe de révolution de la bobine mobile grâce à une première motorisation, bobine mobile comportant un plateau destiné à guider et maintenir la chenille par appui de la tranche de la chenille contre le plateau, le plateau portant la bobine étant monté par rapport au châssis sur des articulations dont l'axe (dit axe de retournement transversal) est perpendiculaire à l'axe de révolution de la bobine, une seconde motorisation permettant de faire pivoter le plateau autour de l'axe de retournement transversal pour faire passer l'axe de révolution de la bobine mobile entre une position horizontale et une position verticale, le châssis comportant des roulettes destinées à permettre le déplacement du dispositif de manutention.

Avantageusement, la bobine est amovible.

L'invention porte également sur un dispositif de changement de semelles pour une chenille de véhicule comportant un dispositif de manutention dispositif de changement de semelles caractérisé en ce qu'il comprend aussi une structure de convoyage comportant une bande de convoyage destinée à convoyer la chenille sur sa tranche d'une extrémité à l'autre de la structure de convoyage, structure de convoyage interfaçable au niveau de sa première extrémité avec le dispositif de manutention et interfaçable au niveau de sa seconde extrémité avec une table comportant une seconde bobine, dite bobine sur table, qui comporte un plateau horizontal ainsi qu'un fut d'axe vertical, table comportant un moyen moteur pour enrouler ou dérouler la chenille autour du fut, la structure de convoyage comportant au moins un poste de travail.

Avantageusement, le poste de travail comporte des moyens de démontage des semelles.

Avantageusement, le poste de travail comporte des moyens de nettoyage des portées de vissage des semelles.

Avantageusement, le poste de travail comporte des moyens de remontage des semelles.

Avantageusement, la table comporte des emplacements sous la bobine sur table pour le passage d'instruments de manutention.

L'invention porte aussi sur un procédé de changement de semelles d'une chenille de véhicule et mettant en oeuvre le dispositif de changement de semelles, procédé caractérisé par les étapes suivantes :
- fixer une extrémité d'une chenille déroulée au sol sur la bobine mobile positionnée avec son axe horizontal,
- faire tourner la bobine mobile sur elle-même afin de bobiner la chenille,
- faire pivoter la bobine mobile de façon à positionner son axe de révolution verticalement,
- interfacer le dispositif de manutention avec une extrémité de la structure de convoyage,
- dérouler la chenille de la bobine mobile en la faisant transiter sur la bande de roulement de la structure de convoyage,
- accrocher une extrémité de la chenille à la bobine sur table,
- faire tourner pas à pas la bobine sur table pour enrouler la chenille sur la bobine sur table et faire tourner simultanément la bobine mobile pour dérouler la chenille de celle-ci,
- démonter chaque semelle de chenille lors de son passage au poste de démontage,
- nettoyer chaque emplacement de semelle de chenille lors de son passage au poste de nettoyage.

Avantageusement, les étapes suivantes peuvent être adjointes au procédé :
- après démontage et nettoyage, faire tourner pas à pas la bobine sur table pour dérouler la chenille de la bobine sur table et faire tourner simultanément la bobine mobile pour enrouler la chenille sur celle-ci,
- remonter chaque semelle lors du passage d'un emplacement de semelle propre au poste de montage.

L'invention sera mieux comprise à la lumière de la description suivante, description faite en référence aux dessins annexés, dessins dans lesquels :
La figure 1 représente un dispositif de changement de semelles selon l'invention.
La figure 2 représente une vue d'un dispositif de manutention selon l'invention, représenté en position d'enroulement ou déroulement d'une chenille sur le sol, donc avec son axe de bobine horizontal.
La figure 3 représente ce même dispositif de manutention avec son axe de bobine vertical.

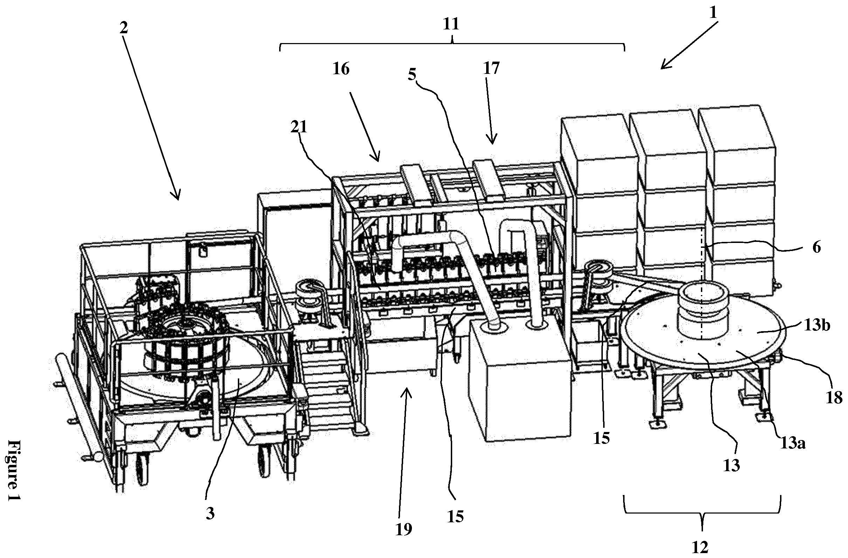

Selon la figure 1, un dispositif de changement de semelles 1 pour chenilles de véhicule, par exemple de chenilles de char, comporte un dispositif de manutention 2 de chenille selon l'invention. Le dispositif de manutention 2 est interfaçable avec une première extrémité d'une structure de convoyage 11 d'une chenille 5, structure qui comporte à sa seconde extrémité une table 12, comportant une bobine 13 (dite bobine sur table), ainsi qu'une motorisation apte à faire tourner la bobine sur table autour de son axe (motorisation non visible).

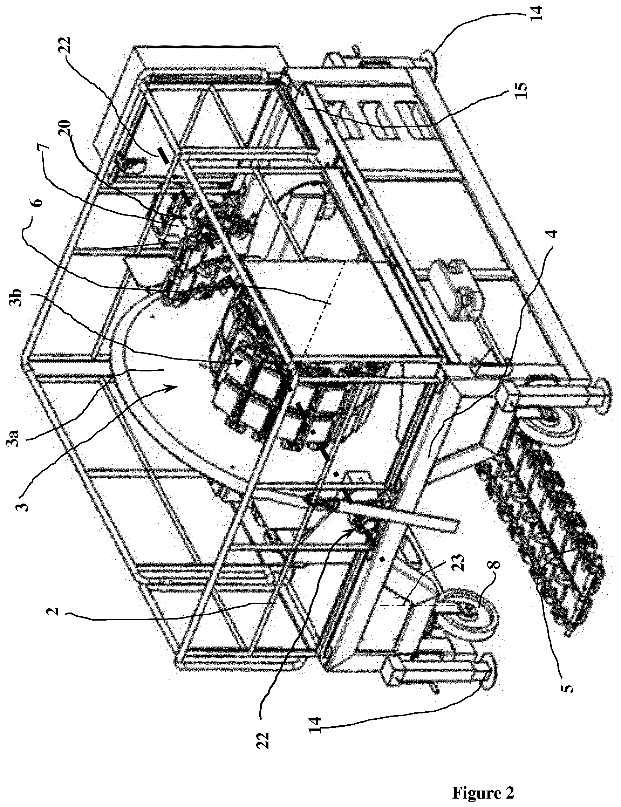

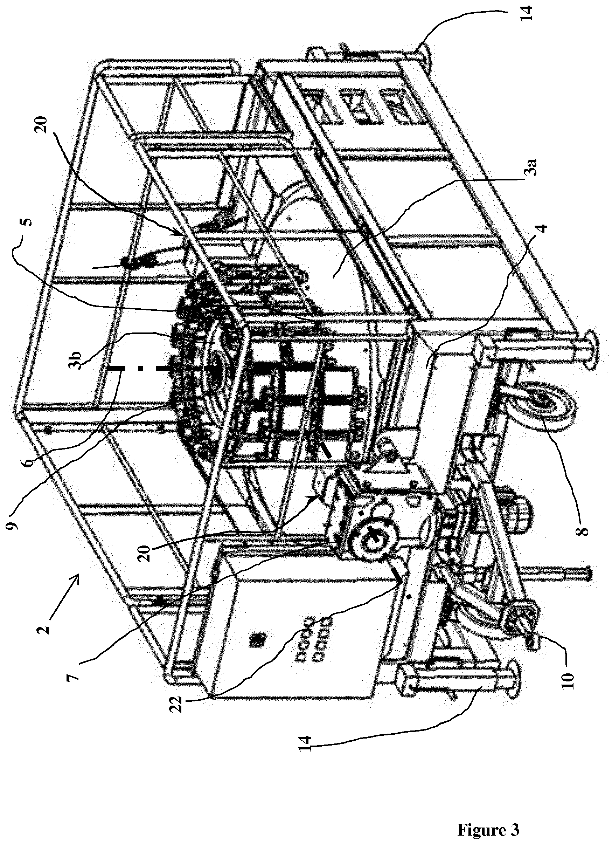

Selon la figure 2, le dispositif de manutention 2 comporte un châssis métallique 4 supportant une bobine mobile 3 qui est destinée à enrouler autour d'un fut 3b une chenille 5 qui est posée déroulée au sol. Le fut 3b est mieux vu à la figure 3. Il est cylindrique et d'axe de révolution 6.

La bobine mobile 3 est reliée à un plateau 3a par rapport auquel elle est montée pivotante sur un palier (non représenté) autour de son axe de révolution 6. Une première motorisation 9 qui est par exemple solidaire du plateau 3a et logée dans une cavité axiale de la bobine 3 (voir figure 3) permet de faire tourner la bobine 3 autour de son axe de révolution 6.

Le plateau 3a portant la bobine 3 est monté par rapport au châssis 4 sur des articulations 20 (figure 3) dont l'axe 22 (dit axe de retournement transversal) est perpendiculaire à l'axe de révolution 6 de la bobine 3.

Une seconde motorisation 7 (ou motorisation de retournement) permet de faire pivoter le plateau 3a autour de l'axe de retournement transversal 22 pour faire passer l'axe de révolution 6 de la bobine mobile entre une position horizontale (figure 2) et une position verticale (figure 3).

Le châssis 4 comporte des roulettes 8 destinées à positionner le dispositif de manutention 2 au-dessus d'une extrémité de la chenille 5 déroulée au sol. Le fut 3b de la bobine 3 permet de fixer une première extrémité de la chenille 5 (première extrémité non visible).

Lorsque la première motorisation 9 est actionnée, la chenille 5 est enroulée autour du fut 3b. Le plateau 3a sert à guider latéralement l'enroulement de la chenille 5 au niveau de la tranche de celle-ci.

Compte tenu de la masse de la chenille, la rotation de la bobine mobile 3 sur elle-même provoque l'enroulement de la chenille 5 et entraine également l'avancement du dispositif de manutention 2 sur ses roulettes 8, parallèlement à la chenille 5. On réduit ainsi fortement les efforts mécaniques liés à l'enroulement de la chenille et la première motorisation 9 peut être de puissance modérée. Le dispositif de manutention 2 de la bobine mobile 3 se déplace en effet sur ses roulettes pendant l'enroulement de la chenille qui ne frotte donc plus sur le sol.

Bien entendu les roulettes seront définies de façon à se positionner de la façon appropriée permettant l'avancement du dispositif parallèlement à la chenille (par exemples des roulettes montées sur des pivots verticaux 23) .

Comme visible à la figure 3, une fois la chenille 5 bobinée, la motorisation de retournement 7 fait pivoter la bobine mobile 3 portant la chenille 5 de manière à placer l'axe de révolution 6 de la bobine 3 verticalement. Le plateau 3a offre alors une zone d'appui pour la tranche de la chenille 5 enroulée sur elle-même.

On notera que le châssis 4 du dispositif de manutention 2 comporte un moyen d'attelage 10 permettant de tracter (véhicule tracteur non représenté) le dispositif de manutention 2 jusqu'à la première extrémité de la structure de convoyage 16 visible à la figure 1.

Des pieds stabilisateurs 14 sont abaissés aux quatre coins du châssis 4 du dispositif de manutention 2 afin de l'immobiliser et de le stabiliser une fois le châssis 4 interfacé avec la structure de convoyage 11.

Selon la figure 1, le dispositif de changement de semelles comporte une structure de convoyage 11 qui comporte une bande de convoyage 15 sur laquelle la chenille 5 est déroulée et prend appui par sa tranche inférieure. Cette bande de convoyage 15 comporte un tapis souple posé sur des paliers d'axe transversaux au cheminement de la chenille afin de réduire le frottement lors du déplacement de la chenille 5 d'une extrémité à l'autre de la structure de convoyage 11.

La chenille 5 est maintenue sur sa tranche tout au long de sa traversée de la structure de convoyage 11 par des éléments de guidage horizontaux 21 comportant des rails de guidage 21.

Une motorisation éventuelle (motorisation non représentée) permet de faire tourner, en continu ou en pas à pas, la bande de convoyage 15 sur toute la longueur de la structure de convoyage 11, ce qui fait progresser la chenille 5 sur la longueur de la structure de convoyage 11 jusqu'à la seconde extrémité de celle-ci.

La chenille 5 est accrochable à une bobine 13 (dite bobine sur table) qui est située à la seconde extrémité de la structure de convoyage 11 et portée par la table 12. Cette seconde bobine 13, entraînée par sa propre motorisation, va alors pouvoir enrouler la chenille 5 autour de son axe de révolution 6 vertical en lui faisant prendre appui sur sa tranche sur le plateau horizontal 13a.

On notera que pour mouvoir la chenille 5 au sein du dispositif 1 de manutention et de changement de semelles de chenille, toutes les motorisations des différentes bobines 3 et 13 et (éventuellement) de la bande de convoyage 15 sont synchrones et peuvent fonctionner en continu ou en pas à pas dans le sens d'un transfert de la chenille 5 allant de la bobine mobile 3 vers la bobine sur table 13 ou dans le sens inverse.

Selon la figure 1 et selon un mode particulier de réalisation de l'invention, la structure de convoyage 11 comporte trois postes de travail 16, 17 et 19.

Un premier poste 16 dédié au démontage des semelles. Un second poste 17 dédié au nettoyage des emplacements de semelles sur la chenille 5 et un troisième poste 19 pour le remontage des semelles.

Le premier 16 et troisième 19 postes pourront comme représenté sur la figure ne former qu'un seul poste, ce poste unique servant au démontage 16 des semelles lors d'un premier passage d'une chenille dans le sens de la bobine mobile 3 à la bobine sur table 13, et de poste de remontage 19 lors d'un second passage de la chenille en sens inverse, allant de la bobine sur table 13 à la bobine mobile 3. Les postes de montage 19 et de démontage 16 comporteront des moyens de montage mécanisés tels que des clés à chocs pneumatiques et des bacs de réception des pièces démontées ou des magasins de mise à disposition des semelles neuves et de leurs éléments d'assemblage en attente de montage.

Le poste de nettoyage 17 pourra comporter comme moyen de nettoyage des brosses métalliques rotatives montées sur un cadre permettant de positionner rapidement et efficacement les brosses en regard des zones à nettoyer telles que les portées de vis ou de semelle de la chenille 5.

Ainsi, durant le passage de la chenille 5 au premier poste 16 de la structure de convoyage 11, chaque semelle usagée est démontée par des opérateurs (opérateurs non représentés) situés de part et d'autre de la chenille 5 laissant un emplacement de semelle vide sur la chenille 5.

En passant au niveau du poste de nettoyage 17, chaque emplacement de semelle vide et les points de serrages vides laissés par la semelle de l'autre côté de la chenille 5 sont nettoyés manuellement ou par des moyens mécanisés.

Au passage du troisième poste 19 des semelles neuves sont montées sur la chenille 5.

Avec le dispositif selon la figure 1, il est donc nécessaire de faire passer la chenille de la bobine sur table 13 vers la bobine mobile 3, après le démontage de toutes les semelles et le nettoyage. C'est au cours de ce passage en sens inverse que les nouvelles semelles sont montées au niveau du poste de remontage 19. En fin de remontage une chenille ressemelée est enroulée autour de la bobine mobile 3.

Le dispositif de manutention 2 servira ensuite à remettre l'axe de révolution 6 de la bobine mobile 3 à l'horizontale, puis à débobiner la chenille 5 au sol juste devant le véhicule à équiper avec cette chenille 5 ainsi ressemelée. Le niveau de mécanisation et d'automatisation du dispositif 1 permet de réduire très considérablement la pénibilité et les efforts physiques demandés aux opérateurs pour la manutention des chenilles puisqu'ils n'ont qu'à accrocher une extrémité de chenille à une bobine mobile pour opérer l'enroulement et le retournement de la chenille. Les opérations de changement de semelle sont également simplifiées et moins pénibles puisque pouvant se passer à hauteur d'homme. Un tel dispositif 1 ne nécessite pas plus de deux opérateurs, résolvant ainsi le problème du nombre d'opérateurs élevé.

A titre de variante, il serait possible de réaliser un dispositif de changement de semelle dans lequel la bande de convoyage 15 serait plus longue et autoriserait la mise en place du poste 19 de remontage des semelles entre le poste de nettoyage et la bobine sur table 13. Dans ce cas, il ne serait plus nécessaire de prévoir un second passage en sens inverse de la chenille. La chenille pourrait alors être enroulée sur la bobine sur table 13, nettoyée et déjà équipée de semelles neuves.

Il sera alors avantageux d'utiliser pour la bobine sur table 13 un dispositif de manutention identique à celui disposé en amont de la structure de convoyage 11. Ce deuxième dispositif récepteur pourra alors conduire la chenille nettoyée et ressemelée sur le terrain pour sa mise en place sur un véhicule.

Sinon, dans le cas où la chenille 5 doit être directement remontée sur un véhicule, alors la chenille 5 doit être débobinée de la bobine sur table 13 et rembobinée sur la bobine mobile 3 comme dans le cas précédent.

Dans ce cas de figure où la chenille est ressemelée avant son enroulement sur la bobine sur table 13, une fois que toutes les semelles auront été changées, la chenille 5 se trouvera entièrement bobinée sur la bobine sur table 13. On notera à la figure 1 que la table 12 qui est représentée supportant la bobine sur table 13 comporte des passages 18 destinés à des éléments de manutention tels que des élingues ou des fourches de chariot élévateur (élingues et fourches de chariot non représentées) pour permettre la manutention de la chenille bobinée 5 sur la bobine sur table 13 jusque dans une aire de stockage éventuelle.

A ce titre, la motorisation du fut 13b de la bobine 13 sur table 12 sera préférentiellement solidaire de la table 12 et pourra s'interfacer avec chaque bobine 13 sur table qui sera déposée sur la table 12.

Le dispositif de manutention 2 de chenille pourra être utilisé indépendamment du dispositif de convoyage 11, par exemple pour transporter directement des chenilles, ressemelées ou neuves et enroulées sur des bobines, depuis une aire de stockage jusque vers un véhicule à équiper et en face duquel ces chenilles seront déroulées par le dispositif de manutention 2. Pour cela la bobine mobile 3 sera liée de façon amovible relativement au dispositif de manutention.

## Revendications

1. Dispositif de manutention (2) pour une chenille (5) de véhicule comportant un châssis (4) portant une bobine mobile (3) ayant un axe de révolution (6), et comportant un fut (3b) destiné à enrouler ou dérouler la chenille (5) autour de l'axe de révolution (6) de la bobine mobile (3) grâce à une première motorisation (9), bobine mobile (3) comportant un plateau (3a) destiné à guider et maintenir la chenille (5) par appui de la tranche de la chenille (5) contre le plateau (3a), le plateau (3a) portant la bobine (5) étant monté par rapport au châssis (4) sur des articulations (20) dont l'axe (dit axe de retournement transversal (22)) est perpendiculaire à l'axe de révolution (6) de la bobine (3), une seconde motorisation (7) permettant de faire pivoter le plateau (3a) autour de l'axe de retournement transversal (22) pour faire passer l'axe de révolution (6) de la bobine mobile (3) entre une position horizontale et une position verticale, **caractérisé en ce que** le châssis (4) comporte des roulettes (8) destinées à permettre le déplacement du dispositif de manutention (2) .

2. Dispositif de manutention (2) selon la revendication 1, **caractérisé en ce que** la bobine (3) est amovible.

3. Dispositif de changement de semelles (1) pour une chenille (5) de véhicule comportant un dispositif de manutention (2) selon une des revendications 1 ou 2, dispositif (1) ***caractérisé en ce qu'***il comprend aussi une structure de convoyage (11) comportant une bande de convoyage (15) destinée à convoyer la chenille (5) sur sa tranche d'une extrémité à l'autre de la structure de convoyage (11), structure de convoyage (11) interfaçable au niveau de sa première extrémité avec le dispositif de manutention (2) et interfaçable au niveau de sa seconde extrémité avec une table (12) comportant une seconde bobine (13), dite bobine sur table (13), qui comporte un plateau horizontal (13a) ainsi qu'un fut (13b) d'axe vertical (6), table (13)comportant un moyen moteur pour enrouler ou dérouler la chenille (5) autour du fut (13b), la structure de convoyage (11) comportant au moins un poste de travail (16,17,19).

4. Dispositif de changement de semelles (1) selon la revendication 3, **caractérisé en ce que** le poste de travail (16,17,19) comporte des moyens de démontage des semelles.

5. Dispositif de changement de semelles (1) selon une des revendications 3 ou 4, **caractérisé en ce que** le poste (16,17,19) de travail comporte des moyens de nettoyage des portées de vissage des semelles.

6. Dispositif de changement de semelles selon une des revendications 3 à 5, **caractérisé en ce que** le poste de travail (16,17,19) comporte des moyens de remontage des semelles.

7. Dispositif de changement de semelles (1) selon une des revendications 3 à 6 **caractérisé en ce que** la table (12) comporte des emplacements (18) sous la bobine sur table (13) pour le passage d'instruments de manutention.

8. Procédé de changement de semelles d'une chenille (5) de véhicule et mettant en oeuvre le dispositif de changement de semelles (1) selon une des revendications 3 à 7, procédé **caractérisé par** les étapes suivantes :
- fixer une extrémité d'une chenille (5) déroulée au sol sur la bobine mobile (3) positionnée avec son axe horizontal (6),
- faire tourner la bobine mobile (3) sur elle-même afin de bobiner la chenille (5),
- faire pivoter la bobine mobile (3) de façon à positionner son axe de révolution (6) verticalement,
- interfacer le dispositif de manutention (2) avec une extrémité de la structure de convoyage (11),
- dérouler la chenille (5) de la bobine mobile (3) en la faisant transiter sur la bande de roulement (15) de la structure de convoyage (11),
- accrocher une extrémité de la chenille (5) à la bobine sur table (12),
- faire tourner pas à pas la bobine sur table (12) pour enrouler la chenille (5) sur la bobine sur table (12) et faire tourner simultanément la bobine mobile (3) pour dérouler la chenille (5) de celle-ci,
- démonter chaque semelle de chenille (5) lors de son passage au poste de démontage,
- nettoyer chaque emplacement de semelle de chenille (5) lors de son passage au poste de nettoyage.

9. Procédé de changement de semelles selon la revendication 8, procédé **caractérisé par** les étapes suivantes :
- après démontage et nettoyage, faire tourner pas à pas la bobine sur table (13) pour dérouler la chenille (5) de la bobine sur table (13) et faire tourner simultanément la bobine mobile (3) pour enrouler la chenille (5) sur celle-ci,
- remonter chaque semelle lors du passage d'un emplacement de semelle propre au poste de montage.

## Patentansprüche

1. Instandsetzungsvorrichtung (2) für eine Fahrzeuglaufkette (5), umfassend ein Fahrgestell (4), das eine bewegliche Spule (3) mit einer Rotationsachse (6) trägt, und umfassend eine Trommel (3b), die ausgelegt ist, um die Laufkette (5) um die Rotationsachse (6) der beweglichen Spule (3) dank eines ersten Antriebs (9) auf- und abzurollen, wobei die bewegliche Spule (3) eine Platte (3a) umfasst, die ausgelegt ist, um die Laufkette (5) zu führen und durch Auflage des Abschnitts der Laufkette (5) gegen die Platte (3b) zu halten, wobei die Platte (3a), die die Spule (5) trägt, relativ zum Fahrgestell (4) auf Gelenken (20) montiert ist, deren Achse (bezeichnet als Quer-Rückführungsachse (22)), senkrecht zur Rotationsachse (6) der Spule (3) ist, wobei ein zweiter Antrieb (7) ermöglicht, die Platte (3a) um die Quer-Rückführungsachse (22) zu schwenken, um die Rotationsachse (6) der beweglichen Spule (3) zwischen einer horizontalen Position und einer vertikalen Position verlaufen zu lassen, **dadurch gekennzeichnet, dass** das Fahrgestell (4) Laufrollen (8) umfasst, die ausgelegt sind, um die Bewegung der Instandsetzungsvorrichtung (2) zu ermöglichen.

2. Instandsetzungsvorrichtung (2) nach Anspruch 1, **dadurch gekennzeichnet, dass** die Spule (3) abnehmbar ist.

3. Vorrichtung zum Wechseln der Laufflächen (1) für eine Fahrzeuglaufkette (5), umfassend eine Instandsetzungsvorrichtung (2) nach einem der Ansprüche 1 oder 2, wobei die Vorrichtung (1) **dadurch gekennzeichnet ist, dass** sie auch eine Fördereinrichtung (11) mit einem Förderband (15) umfasst, das ausgelegt ist, um die Laufkette (5) über ihrem Abschnitt von einem Ende der Fördereinrichtung (11) zum anderen zu fördern, wobei die Fördereinrichtung (11) auf der Ebene ihres ersten Endes mit der Instandsetzungsvorrichtung (2) eine Schnittstelle bilden kann und auf der Ebene ihres zweiten Endes mit einem Tisch (12) eine Schnittstelle bilden kann, der eine zweite Spule (13), bezeichnet als Tischspule (13) umfasst, der eine horizontale Platte (13a) sowie eine Trommel (13b) mit vertikaler Achse (6) umfasst, wobei der Tisch (13) ein Antriebsmittel zum Auf- oder Abwickeln der Laufkette (5) um die Trommel (13b) umfasst, wobei die Fördereinrichtung (11) mindestens eine Arbeitsstation (16, 17, 19) umfasst.

4. Vorrichtung zum Wechsel der Laufflächen (1) nach Anspruch 3, **dadurch gekennzeichnet, dass** die Arbeitsstation (16, 17, 19) Mittel zum Demontieren der Laufflächen umfasst.

5. Vorrichtung zum Wechsel der Laufflächen (1) nach einem der Ansprüche 3 oder 4, **dadurch gekennzeichnet, dass** die Arbeitsstation (16, 17, 19) Mittel zum Reinigen der Anschraubbereiche der Laufflächen umfasst.

6. Vorrichtung zum Wechsel der Laufflächen nach einem der Ansprüche 3 bis 5, **dadurch gekennzeichnet, dass** die Arbeitsstation (16, 17, 19) Mittel zum erneuten Montieren der Laufflächen umfasst.

7. Vorrichtung zum Wechsel der Laufflächen (1) nach einem der Ansprüche 3 bis 6, **dadurch gekennzeichnet, dass** der Tisch (12) unter der Tischspule (13) Stellen (18) für den Durchgang von Instandsetzungsinstrumenten umfasst.

8. Verfahren zum Wechseln der Laufflächen einer Fahrzeuglaufkette (5) und Durchführen der Vorrichtung zum Wechsel der Laufflächen (1) nach einem der Ansprüche 3 bis 7, wobei das Verfahren durch die folgenden Schritte gekennzeichnet ist:
- Befestigen eines Endes einer am Boden abgewickelten Laufkette (5) auf der beweglichen Spule (3), die mit ihrer horizontalen Achse (6) positioniert ist,
- Drehen der beweglichen Spule (3) um sich selbst, um die Laufkette (5) zu spulen,
- Schwenken der beweglichen Spule (3), um ihre Rotationsachse (6) vertikal zu positionieren,
- Bilden einer Schittstelle der Instandsetzungsvorrichtung (2) mit einem Ende der Fördereinrichtung (11),
- Abwickeln der Laufkette (5) von der beweglichen Spule (3), indem sie über den Rollband (15) der Fördereinrichtung (11) verschoben wird,
- Anbringen eines Endes der Laufkette (5) an die Tischspule (12),
- schrittweises Drehen der Tischspule (12), um die Laufkette (5) auf der Tischspule (12) aufzuwickeln und gleichzeitiges Drehen der beweglichen Spule (3), um die Laufkette (5) von dieser abzuwickeln,
- Demontieren jeder Lauffläche (1) beim ihrem Durchgang zurDemontagestation,
- Reinigen jeder Stelle einer Kettenlauffläche (1) bei ihrem Durchgang zur Reinigungsstation.

9. Verfahren zum Wechseln der Laufflächen nach Anspruch 8, wobei das Verfahren durch die folgenden Schritte gekennzeichnet ist:
- nach der Demontage und Reinigung schrittweises Drehen der Tischspule (13), um die Laufkette (5) von der Tischspule (13) abzuwickeln, und gleichzeitiges Drehen der beweglichen Spule (3), um die Laufkette (5) auf dieser aufzuwickeln,
- Erneutes Montieren jeder Lauffläche beim Durchgangeiner sauberen Laufflächenstelle zur Montagestation.

## Claims

1. A handling device (2) for a vehicle track (5), comprising a frame (4) carrying a movable reel (3) having an axis of revolution (6), and comprising a core (3b) for rolling or unrolling the track (5) around the axis of revolution (6) of the movable reel (3) using a first motorization (9), said movable reel (3) comprising a plate (3a) for guiding and holding the track (5) with the edge of the track (5) bearing against the plate (3a), the plate (3a) carrying the reel (5) being mounted with respect to the frame (4) on hinges (22) the axis of which (so-called transverse turnover axis (20)) is perpendicular to the axis of revolution (6) of the reel (3), a second motorization (7) allowing pivoting the plate (3a) around the transverse turnover axis (20) to switch the axis of revolution (6) of the movable reel (3) between a horizontal position and a vertical position, **characterised in that** the frame (4) comprises wheels (8) for allowing moving of the handling device (2).

2. The handling device (2) according to claim 1, **characterised in that** the reel (3) is removable.

3. A device (1) for changing shoes of a vehicle track (5), comprising a handling device (2) according to one of claims 1 or 2, said device (1) being **characterised in that** it also comprises a conveyor structure (11) comprising a conveyor belt (15) for conveying the track (5) on the edge thereof from one end of the conveyor structure (11) to the other end, said conveyor structure (11) being able to be connected at the first end thereof to the handling device (2) and at the second end thereof to a table (12) comprising a second reel (13), so-called table reel (13), which is provided with a horizontal plate (13a) as well as a core (13b) with a vertical axis (6), said table (13) comprising a motor means to reel or unreel the track (5) on the core (13b), the conveyor structure (11) comprising at least one workstation (16, 17, 19).

4. The device (1) for changing shoes according to claim 3, **characterised in that** the workstation (16, 17, 19) comprises means for disassembling the shoes.

5. The device (1) for changing shoes according to one of claims 3 or 4, **characterised in that** the workstation (16, 17, 19) comprises means for cleaning the screwing seats for the shoes.

6. The device for changing shoes according to one of claims 3 to 5, **characterised in that** the workstation (16, 17, 19) comprises means for reassembling the shoes.

7. The device (1) for changing shoes according to one of claims 3 to 6, **characterised in that** the table (12) comprises locations (18) under the table reel (13) for allowing the passage of handling tools.

8. A method for changing shoes of a vehicle track (5) and implementing the device (1) for changing shoes according to one of claims 3 to 7, said method being **characterised by** the following steps:
- attaching an end of the track (5) unrolled on the ground to the movable reel (3) arranged with the axis thereof (6) being horizontal,
- rotating the movable reel (3) on itself for reeling the track (5),
- pivoting the movable reel (3) on itself for positioning the axis of revolution (6) thereof vertically,
- connecting the handling device (2) to an end of the conveyor structure (11),
- unreeling the track (5) from the movable reel (3) by passing it on the conveyor belt (15) of the conveyor structure (11),
- attaching an end of the track (5) to the table reel (12),
- rotating step by step the table reel (12) to reel the track (5) on the table reel (12), and simultaneously rotating the movable reel (5) to unreel the track (5) therefrom,
- disassembling each track shoe (5) during the passage thereof in the disassembling workstation,
- cleaning each location of track shoe (5) during the passage thereof in the cleaning workstation.

9. The method for changing shoes according to claim 8, said method being **characterised by** the following steps:
- after the disassembling and cleaning operations, rotating step by step the table reel (13) to unreel the track (5) from the table reel (13), and simultaneously rotating the movable reel (5) to reel the track (5) thereon,
- reassembling each shoe during the passage of a clean location of shoe in the assembling workstation.
